# EUROPÄISCHE PATENTANMELDUNG

(11) **EP 4 471 229 A1**
(43) Veröffentlichungstag der Anmeldung: **04.12.2024**
(21) Anmeldenummer: 23176496.0
(22) Anmeldetag: 31.05.2023
(51) Int. Cl.: E04F 13/06, H02G 3/12, H02G 3/14

(54) **EINBAUTRÄGERANORDNUNG UND VERFAHREN ZUM EINBAU**

(71) Anmelder: Riedlberger, Markus, 85302 Singenbach (DE)
(72) Erfinder: RIEDLBERGER, Markus, 85302 Singenbach (DE)
(74) Vertreter: Wunderlich & Heim Patentanwälte PartG mbB

(57) **Zusammenfassung**

Die Erfindung betrifft eine Einbauträgeranordnung Einbauträgeranordnung mit einem rahmenartigen Einbauträger, welcher eine hülsenartige Aufnahme aufweist, welche zum Aufnehmen und Halten eines Einsatzelementes ausgebildet und einen vorstehenden Vorderrand aufweist, und mindestens einem Einputzflansch an dem Einbauträger mit Durchgangslöchern für Befestigungsschrauben, wobei der Einputzflansch seitlich an die Aufnahme angrenzt und gegenüber dem Vorderrand der Aufnahme rückversetzt ist, wobei der Einbauträger in einen vertieften Einbauraum eines Grundkörpers mit einer im Wesentlichen ebenen Oberfläche einsetzbar und in einer Einputzposition befestigbar ist, und der rahmenartige Einbauträger ausgebildet ist, in der Einputzposition in dem Einbauraum unter Freilassung der Aufnahme in dem Grundkörper höhengerecht zu der im Wesentlichen ebenen Oberfläche eingeputzt zu werden, wobei Einputzmaterial den Einputzflansch überdeckt und bis an den Vorderrand der Aufnahme heranreicht. Nach der Erfingung ist vorgesehen, dass mindestens eine Befestigungsschraube als Justierschraube ausgebildet ist, welche an dem Einbauträger drehbar, aber axial festgelegt gelagert ist, und dass mindestens eine Justierschraube angeordnet ist, durch welche der Einbauträger zur Lagejustierung in der Einputzposition relativ gegenüber dem Grundkörper frei verstellbar und in der gewünschten Lage feststellbar ist.

## Beschreibung

Die Erfindung betrifft eine Einbauträgeranordnung Einbauträgeranordnung mit einem rahmenartigen Einbauträger, welcher eine hülsenartige Aufnahme aufweist, welche zum Aufnehmen und Halten eines Einsatzelementes ausgebildet und einen vorstehenden Vorderrand aufweist, und mindestens einem Einputzflansch an dem Einbauträger mit Durchgangslöchern für Befestigungsschrauben, wobei der Einputzflansch seitlich an die Aufnahme angrenzt und gegenüber dem Vorderrand der Aufnahme rückversetzt ist, wobei der Einbauträger in einen vertieften Einbauraum eines Grundkörpers mit einer im Wesentlichen ebenen Oberfläche einsetzbar und in einer Einputzposition befestigbar ist, und der rahmenartige Einbauträger ausgebildet ist, in der Einputzposition in dem Einbauraum unter Freilassung der Aufnahme in dem Grundkörper höhengerecht zu der im Wesentlichen ebenen Oberfläche eingeputzt zu werden, wobei Einputzmaterial den Einputzflansch überdeckt und bis an den Vorderrand der Aufnahme heranreicht, gemäß dem Oberbegriff des Anspruchs 1.

Die Erfindung betrifft weiterhin ein Verfahren zum Einbau eines Einbauträgers in einen vertieften Einbauraum eines Grundkörpers mit einer im Wesentlichen ebenen Oberfläche, gemäß dem Oberbegriff des Anspruchs 10.

Eine gattungsgemäße Einbauträgeranordnung mit einem sogenannten Einputzadapter geht beispielsweise aus der DE 10 2015 107 496 B3 hervor. Der hierein beschriebene Einputzadapter ist zur Aufnahme von elektrischen oder elektronischen Installationselementen in einer Öffnung eines Mauerwerks oder eines Hohlwandsystems vorgesehen. Dabei soll der Einputzadapter höhengerecht und insbesondere flächenbündig zu einer im Wesentlichen ebenen Wandfläche eines Grundkörpers eingebaut werden. Hierzu wird zunächst eine Installationsdose, etwa für eine elektronische Steckdose oder einen Lichtschalter, in das Mauerwerk eingesetzt. Beim Verputzen des Mauerwerks wird ein Einbauraum um die Installationsdose herum in der Putzschicht freigelassen. An die eingesetzte Einbaudose wird ein Einputzadapter mit Befestigungsschrauben angeschraubt. Mittels der Befestigungsschrauben wird der rahmenartige Einputzadapter gegen die Einputzdose und das Mauerwerk festgespannt.

Der Einputzadapter weist eine hülsenförmige Aufnahme korrespondierend zu der darunterliegenden Installationsdose sowie einen seitlich vorstehenden Einputzflansch mit Gipsmaterial auf. Mittels eines Verputzmaterials wird der Einputzraum verfüllt und verputzt, wobei der Einputzflansch überdeckt wird und das Einputzmaterial bis an einen vorstehenden Vorderrand der hülsenförmigen Aufnahme des Einputzadapters heranreicht. Ziel ist es, den Einputzadapter möglichst flächenbündig in die verputzte Wandfläche einzupassen.

In der Praxis hat sich bei derartigen Einputzadaptern herausgestellt, dass eine Positionsgenauigkeit des Einputzadapters maßgeblich von der Lagegenauigkeit der in das Mauerwerk eingebauten Installationsdose abhängt. Allerdings werden Mauerwerk und darin befindliche Installationsdosen, welche häufig mit einem Installationsschaum befestigt werden, in einem Rohbau mit relativ großen Toleranzen erstellt. Ist beispielswese die Installationsdose zur Fläche des Mauerwerks geringfügig verkippt angeordnet, so kann dies zu einer entsprechend verkippten Anordnung des daran angeschraubten Einputzadapters führen. Somit kann sich auch eine Vorderkante der hülsenförmigen Aufnahme des Einputzadapters verkippen, was ein möglichst bündiges Einputzen in eine ebene Wandfläche erschwert oder sogar unmöglich macht. Dies bedingt einen höheren Aufwand beim Verputzen oder erfordert sogar eine Neuinstallation der darunterliegenden Installationsdose.

Der Erfindung liegt die **Aufgabe** zugrunde, eine Einbauträgeranordnung und ein Verfahren zum Einbau eines Einbauträgers anzugeben, mit welchem ein Einbauträger besonders effizient und positionsgenau eingebaut werden kann.

Die Aufgabe wird zum einen durch eine Einbauträgeranordnung mit den Merkmalen des Anspruchs 1 und zum anderen durch ein Verfahren mit den Merkmalen des Anspruchs 10 gelöst. Bevorzugte Ausführungsformen der Erfindung sind in den jeweils abhängigen Ansprüchen angegeben.

Die erfindungsgemäße Einbauträgeranordnung ist dadurch gekennzeichnet, dass mindestens eine Befestigungsschraube als Justierschraube ausgebildet ist, welche an dem Einbauträger drehbar, aber axial festgelegt gelagert ist, und dass mindestens eine Justierschrauben angeordnet ist, durch welche der Einbauträger zur Lagejustierung in der Einputzposition relativ gegenüber dem Grundkörper frei verstellbar und in der gewünschten Lage feststellbar ist.

Eine Grundidee der Erfindung liegt darin, mindestens eine Befestigungsschraube als Justierschraube auszubilden, welche an dem Einbauträger drehbar, aber axial festgelegt gelagert ist. Wie Befestigungsschrauben können eine oder mehrere Justierschrauben mit einem selbstschneidenden Gewinde in einen Befestigungsbereich am Grundkörper, etwa einem Dübel oder einem entsprechenden Befestigungsbereich an einer Installationsdose, eingeschraubt werden. Im Unterschied zu herkömmlichen Befestigungsschrauben muss jedoch der Einbauträger nicht gegen den Grundkörper, etwa ein Mauerwerk, festgespannt werden, sondern kann mit einem Abstand hierzu gehalten sein. Vielmehr kann der Einbauträger durch die mindestens eine vorgesehene Justierschraube an diesem festgelegt werden, ohne dass der Einbauträger zwingend oder vollständig gegen den Grundkörper gespannt sein muss. Am Befestigungsflansch kann vorzugsweise ein flexibles Abdichtelement, etwa ein Schaumstoffring, angeordnet sein, um einen gebildeten Abstand oder Spalt am Einputzflansch gegen ein Eindringen von Einputzmaterial in die Aufnahme abzudichten.

Durch die axial festgelegte Lagerung der einen oder mehreren Justierschrauben am Einbauträger können die eine oder mehreren Justierschrauben zum Verstellen und Justieren des Einbauträgers relativ zu dem Grundkörper genutzt werden. Die mindestens eine Justierschraube kann mit einem Anfangs- oder Mindestbereich in den Grundkörper gegebenenfalls mit einer oder weiteren Befestigungsschrauben eingeschraubt werden, um eine ausreichende Festlegung zu erzielen. Ein weiteres Verdrehen der mindestens einen Justierschraube kann zum Verstellen und Justieren genutzt werden. Insbesondere kann durch ein unterschiedliches Verstellen von mehreren Justierschrauben der Einbauträger relativ zum Grundkörper und insbesondere auch relativ zu der ebenen Oberfläche sehr exakt ausgerichtet und justiert werden. Vorzugsweise können zwei, drei, vier oder mehr Justierschrauben an einem Einbauträger angeordnet sein.

Eine exakte Ausrichtung des Einbauträgers in eine gewünschte Einputzposition stellt sicher, dass eine Vorderkante oder ein Vorderrand der Aufnahme des Einbauträgers höhengerecht, etwa mit einem definierten Vor- oder Rücksprung gegenüber der umgebenden Oberfläche, insbesondere flächenbündig zu der im Wesentlichen ebenen Oberfläche des Grundkörpers, insbesondere einer vorgesehenen Deckschicht, angeordnet ist. Die Deckschicht kann eine Verputzschicht, eine Deckplatte, ein Estrich oder ein Asphaltbelag oder ähnliches sein.

Die Erfindung ermöglicht ein besonders effizientes und positionsgenaues Einputzen oder Einbauen eines Einbauträgers an dem Grundkörper. Das Einputzen erfolgt durch Einbringen eines entsprechenden Einputz- oder Füllmaterials in den verbliebenen Einbauraum, um diesen zu verfüllen und flächenbündig mit der angrenzenden Oberfläche des Grundkörpers zu verbinden. Das Einputzmaterial kann vorzugsweise ein Gipswerkstoff aber auch Beton, Zement, Ton, Estrich, Asphalt oder ein entsprechend geeigneter Kunststoff sein, welcher zum Einputzen beziehungsweise Verfüllen eine gewisse Fließfähigkeit oder Streichfähigkeit aufweist und nach dem Verarbeiten aushärten kann.

Der Begriff des Einputzens und des Einputzmaterials ist im Sinne der Erfindung nicht beschränkt auf ein Verputzen von Wänden zu verstehen, sondern umfasst jedes Verfüllen des Einbauraumes mit einer geeigneten aushärtbaren Füllmasse, um die hülsenartige Aufnahme des Einbauträgers höhengerecht und insbesondere flächenbündig an die umgebende Oberfläche anzuschließen.

Grundsätzlich können die Justierschrauben so ausgebildet sein, dass sie unmittelbar in den Grundkörper zum Befestigen eingeschraubt werden können. Eine bevorzugte Ausführungsform der Erfindung besteht darin, dass mindestens ein Befestigungselement, insbesondere Befestigungsdübel, in dem Grundkörper angeordnet ist, in welches die mindestens eine Justierschraube zum Verstellen und Festlegen des Einbauträgers eingreift. Insbesondere können bekannte Befestigungsdübel, insbesondere aus einem Kunststoffmaterial, vorab in den Grundkörper eingebracht werden. Diese erlauben ein einfaches Einschrauben der Justierschrauben und gewähren ein zuverlässiges Befestigen.

Besonders vorteilhaft ist es nach einer Weiterbildung der Erfindung, dass das mindestens eine Befestigungselement an einer Einbaudose ausgebildet ist, welche in den Grundkörper eingesetzt ist. Die Einbau- oder Installationsdose kann insbesondere zum Aufnehmen einer elektrischen oder elektronischen Einheit, etwa einer Steckdose oder eines Lichtschalters, ausgebildet sein. Auch andere Komponenten können aufgenommen werden, etwa Stecker für Datenanschlüsse, Pneumatik- oder Hydraulikleitungen, Sauganschlüsse für stationäre Staubsaugeranlagen, Lautsprecher, Radioanlagen, Mikrophone, Sensoren oder Kameras sowie Lüftungsgitter oder Wasserablaufgitter etc. Die Einbaudose kann aus Metall oder vorzugsweise aus einem Kunststoffmaterial ausgebildet sein. In einem Seitenbereich können integrierte Befestigungsdübel oder Befestigungsabschnitte zum Einbringen der mindestens einen Justierschraube angeordnet sein. Hierdurch kann eine Vorjustierung durch die Anordnung der Einbaudose erfolgen.

Nach einer weiteren Ausführungsvariante der Erfindung ist es bevorzugt, dass die mindestens eine Justierschraube einen Schraubenkopf, einen Schraubenabschnitt mit Schraubwindungen und einen Lagerabschnitt aufweist, welcher zwischen dem Schraubenkopf und dem Schraubenabschnitt angeordnet ist, und dass der Lagerabschnitt durchmesserkleiner als der Schraubenkopf und der Schraubenabschnitt unter Ausbildung von zwei Anschlagschultern ausgebildet ist, welche einen axialen Abstand zueinander aufweisen, der gleich oder im Wesentlichen gleich zu einer Wandstärke des Einbauträgers an den Durchgangslöchern ist.

An dem mindestens einen Durchgangsloch können insbesondere verstärkte Bereiche zur Auflage des Schraubenkopfes ausgebildet sein. Der Bereich um die Durchgangslöcher ist mit einer Wandstärke versehen, welche mit der Länge des Lagerabschnitts an der Justierschraube eine Passung, insbesondere eine Spielpassung, zum axialen Festlegen der Justierschraube am Durchgangsloch bildet und die Möglichkeit zur drehenden Lagerung gewährt.

Mit einem Verstellen der Justierschraube kann so auch ein Verstellen des so gehaltenen Einbauträges erfolgen. Durch die Ausbildung und Anordnung mindestens einer Justierschrauben, vorzugsweise auch zwei, drei, vier oder mehr Justierschrauben, kann eine sehr exakte Ausrichtung und Justierung des Einbauträgers durch die Justierschrauben in eine gewünschte Lage erfolgen.

Grundsätzlich kann das Durchgangsloch als ein zylindrisches Loch oder eine zylindrische Bohrung ausgebildet sein. Besonders bevorzugt ist es nach einer Weiterbildung der Erfindung, dass zumindest ein Durchgangsloch als ein Langloch ausgebildet ist. Hierdurch kann in gewissem Umfang eine Verstellung des Einbauträges quer zur Schraubenlängsachse und/oder eine gewisse Verdrehung erfolgen.

Zum Einbringen der Justierschraube in das jeweilige Durchgangsloch des Einbauträgers ist es nach einer Ausführungsform der Erfindung vorteilhaft, dass an den einzelnen Durchganglöchern ein Zugangsschlitz zum seitlichen Einbringen der Justierschraube in das Durchgangsloch ausgebildet ist. Der Zugangsschlitz kann nach dem Einbringen der Justierschraube durch eine Verschlussmasse verschlossen werden. Es kann auch eine elastische Masse am Zugangsschlitz vorgesehen sein, welche ein seitliches Einschieben und Ausschieben einer Justierschraube in das Durchgangsloch ermöglicht, wobei die elastische Masse elastisch verformt wird.

Ein besonders gutes Einputzen des Vorderrandes der Aufnahme wird nach einer Weiterbildung der Erfindung dadurch erzielt, dass der Vorderrand der Aufnahme des Einbauträgers gestuft ausgebildet ist. Die Stufung erfolgt vorzugsweise mit einer Abstufung nach außen. Vorzugsweise sind zwei, drei oder vier Stufen am Vorderrand ausgebildet.

Eine weitere vorteilhafte Ausführungsvariante der Erfindung besteht darin, dass der Einbauträger aus Metall und/oder Kunststoff gebildet ist. Der Einbauträger kann insbesondere aus einem Stahlwerkstoff, Gusseisen oder einem Leichtmetall, insbesondere einer Aluminiumlegierung, bestehen. Ein Einbauträger aus Metall ist besonders formstabil, was vorteilhaft ist, insbesondere wenn der Einbauträger nicht flächig gegen den Grundkörper gespannt wird. Weiterhin kann der Einbauträger auch aus einem formstabilen Kunststoff gebildet sein.

Die erfindungsgemäße Einbauträgeranordnung ist insbesondere dadurch bevorzugt weitergebildet, dass der Grundkörper als eine Wand, ein Boden oder eine Decke ausgebildet ist. Besonders zweckmäßig wird der Einbauträger an einer Wand oder eine Decke innerhalb eines Gebäudes einsetzbar sein. Ein Einbauträger kann aber auch in einem Boden eingebaut werden, wobei ein Verfüllen des Einbauraumes mit Estrich erfolgt. Die Einbauträgeranordnung kann vorzugsweise innerhalb eines Gebäudes aber auch außerhalb eines Gebäudes an beliebigen Bauwerken zum Einsatz kommen, insbesondere auch auf Balkonen, Terrassen, Plätzen oder Straßen. In einem Boden können insbesondere Abflussgitter oder Kanalöffnungen mit einer erfindungsgemäßen Einbauträgeranordnung verbaut werden.

Die Erfindung umfasst weiterhin ein Verfahren zum Einbau eines Einbauträgers in einen vertieften Einbauraum eines Grundkörpers mit einer im Wesentlichen ebenen Oberfläche. Das erfindungsgemäße Verfahren ist dadurch gekennzeichnet, dass eine erfindungsgemäße Einbauträgeranordnung verwendet wird, dass der Einbauträger in dem Einbauraum mittels der mindestens einen Justierschraube in dem Grundkörper befestigt wird, dass mittels der mindestens einen Justierschraube der Einbauträger verstellt und in einer Einputzposition mit einer gewünschten Lage justiert wird und dass anschließend der in der Einbauposition justierte Einbauträger mit einem Einputzmaterial eingeputzt wird, wobei das Einputzmaterial den Einputzflansch überdeckt und bis an den Vorderrand der Aufnahme heranreicht.

Mit dem erfindungsgemäßen Verfahren können die zuvor beschriebenen Vorteile mit einer Einbauträgeranordnung erzielt werden. Das erfindungsgemäße Verfahren kann insbesondere zum Bilden der zuvor beschriebenen Einbauträgeranordnung eingesetzt werden.

Eine bevorzugte Ausführungsform des erfindungsgemäßen Verfahrens besteht darin, dass der Einbauträger in seiner Einputzposition flächenparallel zu der im Wesentlichen ebenen Oberfläche des Grundkörpers justiert wird. Durch ein entsprechendes Verstellen der Justierschrauben kann der Einbauträger in einer gewünschten Position flächenparallel zu der ebenen Oberfläche des Grundkörpers ausgerichtet und angeordnet werden.

Besonders vorteilhaft ist es nach einer Weiterbildung der Erfindung, dass der Einbauträger in seiner Einputzposition derart justiert wird, dass der Vorderrand der Aufnahme in einer Ebene mit der im Wesentlichen ebenen Oberfläche des Grundkörpers liegt und dass ein Einputzen des Einbauträgers flächenbündig zu der im Wesentlichen ebenen Oberfläche des Grundkörpers durchgeführt wird. Auf diese Weise können beispielsweise Lichtschalter oder Steckdosen ohne Vorsprung gegenüber einer Wand oder einer sonstigen ebenen Oberfläche eines Grundkörpers verbaut werden.

Nach einer Weiterbildung der Erfindung ist es zudem bevorzugt, dass vor dem Befestigen des Einbauträgers eine Einbaudose, insbesondere für elektrische/elektronische Einsatzelement, in den Grundkörper eingebaut wird. Eine entsprechende Einbaudose kann vorzugsweise aus einem Kunststoffmaterial ausgebildet sein, wobei die Justierschrauben vorzugsweise in entsprechende Aufnahmebereiche der Einbaudose einschraubbar sind.

Nach einer weiteren Ausführungsform des erfindungsgemäßen Verfahrens ist es bevorzugt, dass in die Aufnahme ein elektrisches, ein elektronisches, ein lüftungstechnisches und/oder sanitärtechnisches Einsatzelement flächenbündig zu der umgebenen, im Wesentlichen ebenen Oberfläche des Grundkörpers eingebaut wird. So können verschiedenste elektronische, elektrische und lüftungstechnische Elemente positionsgenau, insbesondere flächenbündig, in Wände, Decken oder Böden verbaut werden. In Decken können insbesondere Einbauleuchten verbaut werden. In Böden können entsprechende elektrische, elektronische oder Lüftungstechnische Einsatzelemente und insbesondere sanitärtechnische Elemente verbaut werden. Dies umfasst grundsätzlich auch Abflussgitter und Kanalabdeckungen, welche so ohne störende Vorsprünge in einer Bodenfläche flächenbündig verbaut werden können.

Die Erfindung wird nachfolgend anhand von bevorzugten Ausführungsbeispielen weiter beschrieben, welche schematisch in den Zeichnungen dargestellt sind. In den Zeichnungen zeigen:
- Fig. 1: eine perspektivische Ansicht einer erfindungsgemäßen Einbauträgeranordnung;
- Fig. 2: eine Querschnittsansicht zu einer erfindungsgemäßen Einbauträgeranordnung in einer Wand;
- Fig. 3: eine vergrößerte Detailquerschnittsansicht zu einer Justierschraube an einem Befestigungsflansch der erfindungsgemäßen Einbauträgeranordnung; und
- Fig. 4: eine Querschnittsansicht zu einer erfindungsgemäßen Einbauträgeranordnung in einem Boden.

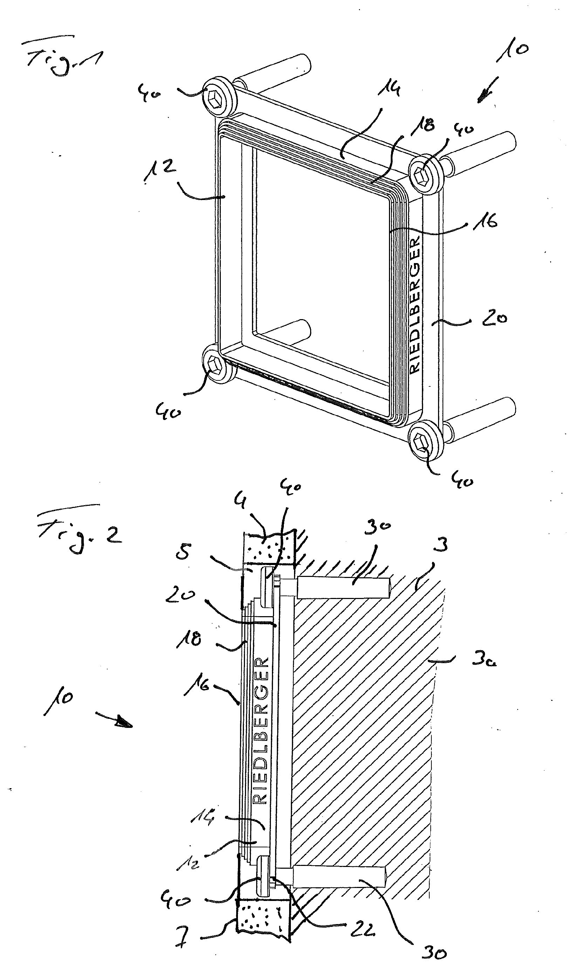

Eine erfindungsgemäße Einbauträgeranordnung 10 gemäß den Figuren 1 und 2 weist einen rahmenartigen Einbauträger 12 auf, welcher im dargestellten Ausführungsbeispiel rechteckig, insbesondere quadratisch, ausgebildet sein kann. Andere Formen, wie rund, oval, polygonförmig etc., sind möglich. Der Einbauträger 12 weist eine hülsenartige Aufnahme 14 auf, welche in der gezeigten Ausführung eckig ausgebildet sein kann. An seiner nach hinten oder unten gerichteten Unterseite weist der Einbauträger 12 einen seitlich nach außen vorstehenden Einputzflansch 20 auf, welcher beispielsweise in seinen Eckbereichen mehrere Durchgangslöcher 22 zum Durchgang von Justierschrauben 40 aufweisen kann. An seiner vom Befestigungsflansch 20 abgewandten Vorderseite ist die Aufnahme 14 mit einem Vorderrand 16 versehen, welcher im dargestellten Ausführungsbeispiel mit einer Stufung mit nach außen gerichtetenStufen ausgebildet sein kann.

Die erfindungsgemäße Einbauträgeranordnung 10 kann in einem Grundkörper 3 eingebracht werden, welcher in der Darstellung nach Fig. 2 eine im Wesentlichen vertikale Wand 3a sein kann. Der Grundkörper 3 kann eine Deckschicht 4, etwa eine Putzschicht, aufweisen, in welcher ein vertiefter Einbauraum 5 für die erfindungsgemäße Einbauträgeranordnung 10 freigelassen oder eingebracht ist. In den Grundkörper 3 können eine hier nicht dargestellte Einbaudose oder Befestigungselemente 30, etwa Befestigungsdübel, zur Aufnahme der vorzugsweise vier Justierschrauben 40 in bekannter Weise eingebracht werden. Mittels der mindestens einen Justierschraube 40 wird der Einbauträger 12 an dem Grundkörper 3 in dem Einbauraum 5 befestigt. Dabei erfolgt die Befestigung des Einbauträgers 12 allein durch die am Befestigungsflansch 20 axial festgelegten Justierschrauben 40, ohne dass es erforderlich ist, den Befestigungsflansch 20 zwingend gegen den Grundkörper 3 zu spannen.

Mit der erfindungsgemäßen Einbauträgeranordnung 10 kann der Einbauträger 12 durch individuelles Verstellen der mindestens einen Justierschraube 40 frei in seiner Lage relativ zu dem Grundkörper 3 und in dem Einbauraum 5 zu einer gewünschten Einputzposition eingestellt und justiert werden, in welcher der Vorderrand 16 flächenbündig zu einer im Wesentlichen ebenen Oberfläche 7 des Grundkörpers 3 beziehungsweise der Deckschicht 4 am Grundkörper 3 ausgerichtet und angeordnet ist.

Nach der Justierung des Einbauträgers 12 kann der Einbauraum 5 durch eine Füll- oder Einputzmasse, etwa ein Gipsmaterial, so aufgefüllt werden, dass ein flächenbündiger Anschluss des eingebrachten und eingebauten Einbauträgers 12 mit der umgebenden ebenen Oberfläche 7 erreicht ist.

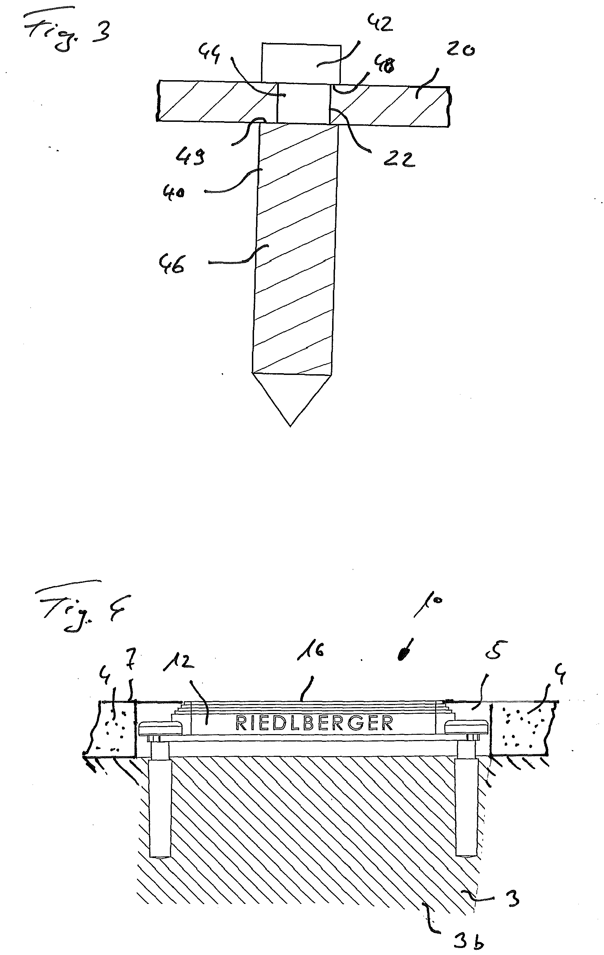

Die Anordnung und Lagerung der Justierschrauben 40 an dem Befestigungsflansch 20 ist schematisch in der vergrößerten Darstellung von Fig. 3 verdeutlicht. Die Justierschraube 40 weist einen Schraubenkopf 42 und einen Schraubenabschnitt 46 mit den Schraubwindungen auf, zwischen welchen ein zylindrischer Lagerabschnitt 44 ausgebildet ist. Der Lagerabschnitt 44 ist durchmesserkleiner als der Schraubenkopf 42 und der Schraubenabschnitt 46, wobei eine obere Anschlagschulter 48 und eine untere Anschlagschulter 49 gebildet sind.

Der zylindrische Lagerabschnitt 44 erstreckt sich zwischen der oberen Anschlagschulter 48 und der unteren Anschlagschulter 49 mit einer vorgegebenen Länge. Diese Länge des Lagerabschnitts 44 entspricht etwa einer Dicke des Befestigungsflansches 20, so dass die Justierschraube 40 am Befestigungsflansch 20 in einem Durchgangsloch 22 exakt oder mit einer gewissen Spielpassung axial festgelegt ist. Ein Durchmesser des Lagerabschnitts 44 entspricht im Wesentlichen einem Durchmesser des Durchgangsloches 22, so dass die Justierschraube 40 an dem Befestigungsflansch 20 drehbar, jedoch relativ dazu axial festgelegt ist. Auf diese Weise kann durch die Justierschraube 40 beim Einschrauben in einen Grundkörper 3 die Lage des Befestigungsflansches 2 und damit des Einbauträgers 12 verändert werden. Somit kann der Einbauträger 12 hierdurch relativ zu dem Grundkörper 3 in seiner Lage individuell eingestellt und justiert werden.

Gemäß Fig. 4 ist eine erfindungsgemäße Einbauträgeranordnung 10 mit einem Einbauträger 12 in einen Grundkörper 3 eingebaut, welcher als ein Boden 3b ausgeführt ist. An dem Boden 3b kann ein Estrich oder eine Asphaltschicht als Deckschicht 4 mit einem vertieften Einbauraum 5 zur Aufnahme des Einbauträgers 12 ausgebildet sein. Wie schon in Zusammenhang mit der Anordnung nach Fig. 2 erläutert, kann über die mindestens eine Justierschraube 40 der Einbauträger 12 in seiner Lage so justiert werden, dass insbesondere der Vorderrand 16 des Einbauträgers 12 in der Ebene der Oberfläche 7 des Bodens 3b liegt. In einer so eingestellten und justierten Position des Einbauträgers 12 kann der verbliebene Einbauraum 5 durch Einbringen einer entsprechenden Estrichmasse oder Asphaltmasse verfüllt werden, wobei der Einbauträger 12 flächenbündig zu der Oberfläche 7 angeschlossen werden kann.

## Patentansprüche

1. Einbauträgeranordnung mit
- einem rahmenartigen Einbauträger (12), welcher eine hülsenartige Aufnahme (14) aufweist, welche zum Aufnehmen und Halten eines Einsatzelementes ausgebildet und einen vorstehenden Vorderrand (16) aufweist, und
- mindestens einem Einputzflansch (20) an dem Einbauträger (12) mit Durchgangslöchern (22) für Befestigungsschrauben, wobei der Einputzflansch (20) seitlich an die Aufnahme (14) angrenzt und gegenüber dem Vorderrand (16) der Aufnahme (14) rückversetzt ist,
- wobei der Einbauträger (12) in einen vertieften Einbauraum (5) eines Grundkörpers (3) mit einer im Wesentlichen ebenen Oberfläche (7) einsetzbar und in einer Einputzposition befestigbar ist, und
- der rahmenartige Einbauträger (12) ausgebildet ist, in der Einputzposition in dem Einbauraum (5) unter Freilassung der Aufnahme (14) in dem Grundkörper (3) höhengerecht zu der im Wesentlichen ebenen Oberfläche (7) eingeputzt zu werden, wobei Einputzmaterial den Einputzflansch (20) überdeckt und bis an den Vorderrand (16) der Aufnahme (14) heranreicht,
**dadurch gekennzeichnet,**
- **dass** mindestens eine Befestigungsschraube als Justierschraube (40) ausgebildet sind, welche an dem Einbauträger (12) drehbar, aber axial festgelegt gelagert ist, und
- **dass** mindestens eine Justierschraube (40) angeordnet ist, durch welche der Einbauträger (12) zur Lagejustierung in der Einputzposition relativ gegenüber dem Grundkörper (3) frei verstellbar und in der gewünschten Lage feststellbar ist.

2. Einbauträgeranordnung nach Anspruch 1,
**dadurch gekennzeichnet,**
**dass** mindestens ein Befestigungselement (30), insbesondere Befestigungsdübel, in dem Grundkörper (3) abgeordnet ist, in welches die mindestens eine Justierschraube (40) zum Verstellen und Festlegen des Einbauträgers (12) eingreift.

3. Einbauträgeranordnung nach Anspruch 1,
**dadurch gekennzeichnet,**
**dass** das mindestens eine Befestigungselement (30) an einer Einbaudose ausgebildet ist, welche in den Grundkörper (3) eingesetzt ist.

4. Einbauträgeranordnung nach einem der Ansprüche 1 bis 3,
**dadurch gekennzeichnet,**
**dass** die mindestens eine Justierschraube (40) einen Schraubenkopf (42), einen Schraubenabschnitt (46) mit Schraubwindungen und einen Lagerabschnitt (44) aufweist, welcher zwischen dem Schraubenkopf (42) und dem Schraubenabschnitt (46) angeordnet ist, und
**dass** der Lagerabschnitt (44) durchmesserkleiner als der Schraubenkopf (42) und der Schraubenabschnitt (46) unter Ausbildung von zwei Anschlagschultern (48, 49) ausgebildet ist, welche einen axialen Abstand zueinander aufweisen, welcher gleich oder im Wesentlichen gleich zu einer Wandstärke des Einbauträgers (12) an den Durchgangslöchern (22) ist.

5. Einbauträgeranordnung nach einem der Ansprüche 1 bis 4,
**dadurch gekennzeichnet,**
**dass** zumindest ein Durchgangsloch (22) als ein Langloch ausgebildet ist.

6. Einbauträgeranordnung nach einem der Ansprüche 1 bis 5,
**dadurch gekennzeichnet,**
**dass** an den einzelnen Durchgangslöchern (22) ein Zugangsschlitz zum seitlichen Einbringen der Justierschraube (40) in das Durchgangsloch (22) ausgebildet ist.

7. Einbauträgeranordnung nach einem der Ansprüche 1 bis 6,
**dadurch gekennzeichnet,**
**dass** der Vorderrand (16) der Aufnahme (14) des Einbauträgers (12) gestuft ausgebildet ist.

8. Einbauträgeranordnung nach einem der Ansprüche 1 bis 7,
**dadurch gekennzeichnet,**
**dass** der Einbauträger (12) aus Metall und/oder Kunststoff gebildet ist.

9. Einbauträgeranordnung nach einem der Ansprüche 1 bis 8,
**dadurch gekennzeichnet,**
**dass** der Grundkörper (3) als eine Wand (3a), ein Boden (3b) oder eine Decke ausgebildet ist.

10. Verfahren zum Einbau eines Einbauträgers (12) in einen vertieften Einbauraum (5) eines Grundkörpers (3) mit einer im Wesentlichen ebenen Oberfläche (7),
**dadurch gekennzeichnet,**
**dass** eine Einbauträgeranordnung (10) nach einem der Ansprüche 1 bis 9 vorgesehen wird,
**dass** der Einbauträger (12) in dem Einbauraum (3) mittels der mindestens einen Justierschraube (40) in dem Grundkörper (3) befestigt wird,
**dass** mittels der mindestens einen Justierschraube (40) der Einbauträger (12) verstellt und in einer Einputzposition mit einer gewünschten Lage justiert wird und
**dass** anschließend der in der Einbauposition justierte Einbauträger (12) mit einem Einputzmaterial eingeputzt wird, wobei das Einputzmaterial den Einputzflansch (20) überdeckt und bis an den Vorderrand (16) der Aufnahme (14) heranreicht.

11. Verfahren nach Anspruch 10,
**dadurch gekennzeichnet,**
**dass** der Einbauträger (12) in seiner Einputzposition flächenparallel zu der im Wesentlichen ebenen Oberfläche (7) des Grundkörpers (3) justiert wird.

12. Verfahren nach Anspruch 10 oder 11,
**dadurch gekennzeichnet,**
**dass** der Einbauträger (12) in seiner Einputzposition derart justiert wird, dass der Vorderrand (16) der Aufnahme (14) in einer Ebene mit der im Wesentlichen ebenen Oberfläche (7) des Grundkörpers (3) liegt, und
**dass** ein Einputzen des Einbauträgers (12) flächenbündig zu der im Wesentlichen ebenen Oberfläche (7) des Grundköpers (3) durchgeführt wird.

13. Verfahren nach einem der Ansprüche 10 bis 12,
**dadurch gekennzeichnet,**
**dass** vor dem Befestigen des Einbauträgers (12) eine Einbaudose, insbesondere für elektrische / elektronische Einsatzelemente, in den Grundkörper (3) eingebaut wird.

14. Verfahren nach einem der Ansprüche 10 bis 13,
**dadurch gekennzeichnet,**
**dass** in die Aufnahme (14) ein elektrisches, ein elektronisches, ein lüftungstechnisches und/oder sanitärtechnisches Einsatzelement flächenbündig zu der umgebenden, im Wesentlichen ebenen Oberfläche (7) des Grundkörpers (3) eingebaut wird.
